# EUROPEAN PATENT APPLICATION

(11) **EP 4 494 981 A1**
(43) Date of publication of application: **22.01.2025**
(21) Application number: 23191128.0
(22) Date of filing: 11.08.2023
(51) Int. Cl.: B62D 35/00

(54) **METHOD, APPARATUS, AND SYSTEM FOR A BI-DIRECTIONAL AERODYNAMIC SPLITTER**

(30) Priority: 19.07.2023 US 202318355054
(71) Applicant: National Association for Stock Car Auto Racing, LLC, Daytona Beach, Florida 32114 (US)
(72) Inventor: Jacuzzi, Eric, Concord (US); Popiela, Christopher, Concord (US); Murphy, Timothy, Concord (US); Dubler, Miya, Concord (US); Halpin, Tracy, Concord (US)
(74) Representative: Papula Oy

(57) **Abstract**

Vehicles, and particularly vehicles configured for high speeds and competitive racing, generally employ aerodynamic elements to provide downforce at increased speeds to improve vehicle safety and performance. The present disclosure relates to a method, apparatus, and system of providing aerodynamic lift forces and downforces on a vehicle, including generating lift forces and downforces in response to air flowing over a bi-directional splitter from a fore end to an aft end, where the bi-directional splitter includes a first surface, a second surface, and a third surface; generating, from the first surface of the bi-directional splitter, a lift force in response to the air flowing over the first surface, ; and generating, from a second surface and a third surface, downforce in response to the air flowing over the second and third surfaces, where the first surface is disposed between the second surface and third surface..

## Description

### TECHNICAL FIELD

The present disclosure relates to a method, apparatus, and system of providing aerodynamic lift forces and downforces on a vehicle as it travels in a forward direction. More particularly, embodiments described herein relate to a method, apparatus, and system for providing aerodynamic lift forces and downforces on a competitive racing vehicle that are intentionally affected based on the vehicle's position relative to other vehicles.

### BACKGROUND

Vehicles, and particularly vehicles configured for traveling at high speeds and for competitive racing, generally employ aerodynamic elements to alter airflow around the vehicle and to provide downforce at increased speeds to increase and maintain vehicle grip with a surface along which the vehicle is traveling.

When racing vehicles are traveling in a generally forward-facing direction on a track, aerodynamic forces act on the vehicle together with the weight of the vehicle to maintain contact between tires of the vehicle with a surface of the track. At higher speeds, vehicles use wind deflection devices such as front-end splitters, rear-deck spoilers, etc. to increase downforce on a vehicle. The general purpose of these wind deflection devices is to generate downforce on the vehicle to counter lift forces that adversely affect vehicle traction and control. A higher downforce generally results in higher attainable speeds, improved vehicle safety through improved tire contact and control, and better vehicle performance.

These aerodynamic devices take advantage of impinging air flow to create favorable conditions for the vehicle. The aerodynamic devices create downforce by altering high- and low-pressure flows about the body of the vehicle. Based on Bernoulli's principle, lower speed air has a higher pressure than higher speed air, and therefore exerts a greater force on the vehicle. This lower speed air being directed over the vehicle creates downforce on the vehicle.

A second consideration for the aerodynamics of the vehicle is the amount of drag generated. The drag force is proportional to the square of the vehicle speed, and therefore a greater drag force results in a lower attainable speed for the vehicle, which is undesirable for a racing vehicle.

### BRIEF SUMMARY

In accordance with the present disclosure, these and other objects, features, and advantages are achieved by the embodiments illustrated herein by the provision of an improved method, apparatus, and system for an aerodynamic splitter configured to be secured on the underside of the fore end of a motor vehicle.

Embodiments provided herein include a method including: generating lift forces and downforces in response to air flowing over a bi-directional splitter from a fore end of the bi-directional splitter to an aft end of the bi-directional splitter, where the bi-directional splitter is attached to an underside of a fore end of a vehicle, where a top side of the bi-directional splitter is attached to the vehicle, and a bottom side of the bi-directional splitter is facing away from the vehicle, where the bi-directional splitter defines a horizontal plane and includes a fore end, an aft end, a first surface, a second surface, and a third surface; generating, from the first surface of the bi-directional splitter, a lift force in response to the air flowing over the first surface, where an aft end of the first surface is further away from the vehicle than a fore end of the first surface; and generating, from a second surface and a third surface, downforce in response to the air flowing over the second and third surfaces, where the first surface is disposed between the second surface and third surface, where aft ends of the second surface are positioned closer to the vehicle than fore ends of the second surface and third surface.

According to some embodiments, the first surface is positioned at an angle of between 5 degrees and 45 degrees away from the vehicle relative to the horizontal plane, and the second surface and third surface are positioned at an angle of between 5 degrees and 45 degrees towards the vehicle relative to the horizontal plane. The method of an embodiment includes a bi-directional splitter where a width of the first surface is substantially equal to a distance between the second surface and the third surface, where a width of the first surface is greater than a width of the second surface and the third surface combined. In an embodiment, a width of the first surface is substantially equal to a distance between the second surface and the third surface. In another embodiment, a width of the second surface and the third surface combined. According to an example embodiment, the first surface, the second surface, and the third surface intersect the horizontal plane at a first distance, a second distance, and a third distance respectively from the fore end of the bi-directional splitter, where the first distance is shorter than the third distance and the second distance. According to an example embodiment, the first surface has a first length between the fore end and the aft end of the first surface, the second surface has a second distance between the fore end and the aft end of the second surface, and the third surface has a third length between the fore end and the aft end of the third surface, where the first length is shorter than the second length and the third length. According to some embodiments, the lift forces and downforces combine to a net lift force in response to air flowing over the bi-directional splitter at a speed of more than 100 miles per hour. According to certain embodiments, the lift forces and downforces combine to a net downforce in response to the air flowing over the first surface being interrupted.

Provided herein is an apparatus including: a bi-directional splitter configured to be attached to an underside of a fore end of a vehicle, where a top side of the bi-directional splitter is attached to the vehicle, and a bottom side of the bi-directional splitter is facing away from the vehicle, where the bi-directional splitter defines a horizontal plane and includes a fore end, an aft end, a first surface, a second surface, and a third surface, where an aft end of the first surface is further away from the vehicle than a fore end of the first surface, where the first surface is disposed between the second surface and third surface, where aft ends of the second surface are positioned closer to the vehicle than fore ends of the second surface and third surface.

According to some embodiments, the first surface is positioned at an angle away from the vehicle relative to the horizontal plane, and the second surface and third surface are positioned at an angle towards the vehicle relative to the horizontal plane. According to some embodiments, the angle of the first surface with respect to the horizontal plane is between 5 degrees and 45 degrees and the angle of the second surface and third surface is between 5 degrees and 45 degrees relative to the horizontal plane. The apparatus of an example embodiment includes a bi-directional splitter where a width of the first surface is substantially equal to a distance between the second surface and the third surface, where a width of the first surface is greater than a width of the second surface and a width of the third surface combined. According to some embodiments, the first surface, the second surface, and the third surface intersect the horizontal plane at a first distance, a second distance, and a third distance respectively from the fore end of the panel, where the first distance is shorter than the third distance and the second distance. According to an embodiment, the first surface has a first length between the fore end and the aft end of the first surface, the second surface has a second distance between the fore end and the aft end of the second surface, and the third surface has a third length between the fore end and the aft end of the third surface, where the first length is shorter than the second length and the third length.

Provided herein is a system including: a vehicle; a bi-directional splitter attached to an underside of a fore end of the vehicle, where a top side of the bi-directional splitter is attached to the vehicle, and a bottom side of the bi-directional splitter is facing away from the vehicle, where the bi-directional splitter defines a horizontal plane and includes a fore end, an aft end, a first surface, a second surface, and a third surface, where an aft end of the first surface is further away from the vehicle than a fore end of the first surface, where aft ends of the second surface and third surface are positioned closer to the vehicle than fore ends of the second surface and third surface. According to some embodiments, the first surface is positioned at an angle away from the vehicle relative to the horizontal plane and wherein the second surface and third surface are disposed at an angle towards the vehicle relative to the horizontal plane. According to some embodiments, the angle of the first surface with respect to the horizontal plane is between 5 degrees and 45 degrees. In an embodiment, the first surface is disposed between the second surface and third surface.

The system of an embodiment includes a bi-directional splitter where a width of the first surface is substantially equal to a distance between the second surface and the third surface, where a width of the first surface is greater than a width of the second surface and a width of the third surface combined. According to an embodiment, the first surface, the second surface, and the third surface intersect the horizontal plane at a first distance, a second distance, and a third distance respectively from the fore end of the bi-directional splitter, where the first distance is shorter than the third distance and the second distance. According to an embodiment, the first surface has a first length between the fore end and the aft end of the first surface, the second surface has a second length between the fore end and the aft end of the second surface, and the third surface has a third length between the fore end and the aft end of the third surface, where the first length is shorter than the second length and the third length.

### BRIEF DESCRIPTION OF THE DRAWINGS

Reference will now be made to the accompanying drawings, which are not necessarily drawn to scale, and wherein:
FIG. 1 is a perspective view of a top side of a bi-directional splitter according to an example embodiment of the present disclosure.
FIG. 2 is a side view of the bi-directional splitter of FIG. 1 according to an example embodiment of the present disclosure.
FIG. 3 is a top view of the bi-directional splitter of FIG. 1 according to an example embodiment of the present disclosure.
FIG. 4 is a perspective view of a top side of a bi-directional splitter according to another example embodiment of the present disclosure.
FIG. 5 is a side view of the bi-directional splitter of FIG. 4 according to an example embodiment of the present disclosure.
FIG. 6 is a top view of the bi-directional splitter of FIG. 4 according to an example embodiment of the present disclosure.
FIG. 7 is a side view of a vehicle illustrating a location on the underside of the fore end of the vehicle for attachment of a bi-directional splitter according to an example embodiment of the present disclosure.
FIG. 8 is a diagram indicating trailing vehicle positions relative to a leading vehicle according to an example embodiment of the present disclosure.
FIG. 9 illustrates airflow paths over the bi-directional splitter of FIG. 1 according to an example embodiment of the present disclosure.
FIG. 10 illustrates resultant lift forces and downforces of a trailing vehicle without the bi-directional splitter and a trailing vehicle using the bi-directional splitter according to an example embodiment of the present disclosure.

### DETAILED DISCLOSURE

The present invention will be described more fully hereinafter with reference to the accompanying drawings, in which some, but not all, embodiments of the inventions are shown. Indeed, these inventions may be embodied in many different forms and should not be construed as limited to the embodiments set forth herein; rather, these embodiments are provided so that this disclosure will satisfy applicable legal requirements.

As used herein, it will be understood that the term "forward travel direction" means a direction that a vehicle is moving when operated under normal conditions such that a front of the vehicle is facing forward in the direction of travel.

As used herein, it will be understood that the term "traffic" refers to a scenario when a trailing vehicle is in a forward travel direction at some offset angle and distance behind a leading vehicle. The term "leading vehicle" refers to a vehicle in a forward travel direction in a traffic scenario, whereas the term "trailing vehicle" refers to a vehicle in a forward travel direction trailing behind the leading vehicle in an in the traffic scenario. The trailing vehicle can be positioned immediately behind the leading vehicle or at a distance from the leading vehicle. The trailing vehicle can be in line with the leading vehicle, or laterally offset from the leading vehicle.

As used herein, it will be understood that the term "centerline" refers to an axis defined by a line segment from the fore end to the aft end of a vehicle. The term "car length" refers to a general length of a vehicle along the centerline from the vehicle's fore end to its aft end. In the context of a traffic scenario, the term "car length" refers to a general distance measure for spacing, as in one, two, or three car lengths between a leading vehicle and a trailing vehicle. The term "car width" refers to a width of the car perpendicular to its length. In the context of a traffic scenario, the term "car width" refers to a distance measure for spacing in a similar manner as "car length" as will be evident in the below description. It is to be appreciated that the term "car length" and "car width" do not define exact distances, but approximate distances as described above.

Automotive vehicle racing takes many forms and competitive levels. Generally, vehicle racing involves multiple vehicles that compete to reach a finish line of a racecourse ahead of other competing vehicles. While some racing is time-based, with vehicles competing for the fastest time, other racing is distance based, where vehicles compete to reach the finish line ahead of other vehicles racing at the same time. In most such races, vehicles often encounter other vehicles in the race and aim to pass or avoid being passed in racing traffic.

Automotive vehicle racing generally benefits from increases in speed, where faster vehicles have an advantage. Vehicle travel speed is influenced by a variety of factors. Vehicle power provides the motive force to drive a vehicle along a course, while aerodynamic drag opposes forward movement of a vehicle. Lift forces, both positive and negative, impact vehicle performance and ultimately speed. Positive lift force, also referred to herein as "lift force," is inherent as vehicle speed increases, as a travel distance for airflow around the vehicle is generally longer over a top side of the vehicle than the bottom side, resulting in positive lift forces acting on the vehicle. Negative lift force, also referred to as downforce hereinafter, is provided by aerodynamic features of a vehicle and counters the positive lift forces to improve vehicle performance and safety.

In addressing safety and performance considerations, vehicle designers must consider these physical forces acting on the moving vehicle. In aerodynamic terms, lift forces, drag forces, weight, and thrust for a vehicle must be considered when designing a vehicle, particularly for racing. Thrust is provided by the vehicle's powertrain through the wheels and tires and is counteracted by drag. Lift is created by the air flowing over, under, and around the vehicle and over contoured surfaces. The positive lift force is responsible for causing the vehicle to become less stable. It is therefore desirable to minimize positive lift forces the vehicle experiences and to counteract the positive lift forces with downforce.

Positive lift may be counteracted by the vehicle's weight and aerodynamic deflection devices on or integrated into the vehicle surface in addition to louvres or ducting to direct airflow in a more desirable path through or around the vehicle to generate downforce. Increased vehicle weight for the purpose of reducing lift negatively affects vehicle performance. Increased vehicle weight reduces fuel economy and reduces handling or roadholding abilities. Therefore, it is preferential to reduce lift by adding aerodynamic control surfaces and deflection devices that create downforce or otherwise reduce lift forces. Aerodynamic deflection devices function by disrupting air flow and create downward forces on the vehicle. Downward force ("downforce") or negative lift may be produced when there is a higher pressure on the top of the vehicle than the pressure on the underside of the vehicle. Downforce is primarily generated over generally horizontal areas such as the hood, roof, rear deck, spoilers, and on an underside of the vehicle through diffusers and splitters.

Racing vehicles are generally designed to achieve the fastest possible speeds within the regulatory regime of a sanctioning body, such as the National Association for Stock Car Racing (NASCAR). Achieving such high speeds and being capable of exceeding 200 mph requires vehicles to be designed to reduce drag while increasing downforce.

Increasing downforce on a vehicle has been achieved in a variety of ways. One common and evident device employed to generate downforce includes a spoiler, and particularly a rear deck-mounted spoiler that is attached or integrated into an aft-end of a vehicle. The rear deck-mounted spoiler is a prominent feature evidentiary of the intentional disruption of airflow over a vehicle to generate downforce. Other aerodynamic features may not be as prominent, and thus, not as evident. The vehicle profile, surface curvatures, louvres, ducts, etc. provide opportunities for the generation of downforce. Generating downforce over a vehicle is important for vehicle performance, particularly at high speeds. Downforce exerted over an aft-end of a vehicle is often beneficial for vehicles that have rear-wheel drive and all-wheel drive as it drives the wheels propelling the vehicle into contact with a road surface. Downforce exerted over a fore end of a vehicle is important for all vehicles as the front wheels of a vehicle are typically steerable and control a travel direction of the vehicle.

Powertrains historically positioned an engine over a front axle of a vehicle, which aided downforce on the front of the vehicle through weight. However, aerodynamic downforce on the front of a vehicle has been more challenging to achieve as a driver views the road ahead over the front end of the vehicle. Spoilers or wings, particularly those that mount on top of a surface, are not well-suited to the front end of a vehicle as they would inhibit a driver's view forward of the vehicle. Open-wheeled race cars can employ spoilers or wings forward of the front wheels as there is no vehicle body to interfere with placement. Increasing the downforce on the fore end of a vehicle having a full body (i.e., wheel arches and fenders over each wheel) can be achieved with a fore end splitter. A fore end splitter redirects air impinging upon the front of the vehicle, and generally redirects air relative to an underside of the vehicle. A fore end splitter can redirect air that would otherwise flow under a vehicle to flow above or around the vehicle to reduce pressure beneath the vehicle, effectively decreasing the lift generated on the underside of the vehicle. A fore end splitter can also act to accelerate the air that does flow under the vehicle, reducing pressure on those surfaces and generating downforce Increasing the downforce at the fore end of the vehicle allows for higher speeds and better control as increased downforce is applied to the front tires improving steering of a vehicle.

Aerodynamics of a vehicle, including surfaces used to generate downforces and positive lift, are often tested in wind tunnels and with a clean, laminar flow of air over the body of the vehicle. However, real world scenarios often fail to mimic these conditions. Racing vehicles, particularly those that engage in close "wheel-to-wheel" racing with closely bunched groups of two or more racing vehicles in racing traffic often do not have the benefit of clean, laminar airflow over the body of the vehicle. Thus, aerodynamic elements that function well in such clean, laminar airflow may not function as intended when a racing vehicle is in traffic. Embodiments described herein are configured to function within a racing scenario in which traffic exists, where the performance of the aerodynamic elements intentionally changes based on relative positions between vehicles.

Embodiments of the present disclosure generally relate to an aerodynamic splitter for a fore end of a vehicle. More specifically, embodiments are provided that generate different aerodynamic forces depending upon a relative position of a vehicle within race traffic, and specifically relative to a leading vehicle. Embodiments provide a front splitter that employs multiple surfaces at differing angles to provide both positive lift and downforce in the form of a bi-directional splitter, with those forces being impacted by the position and proximity of a leading vehicle.

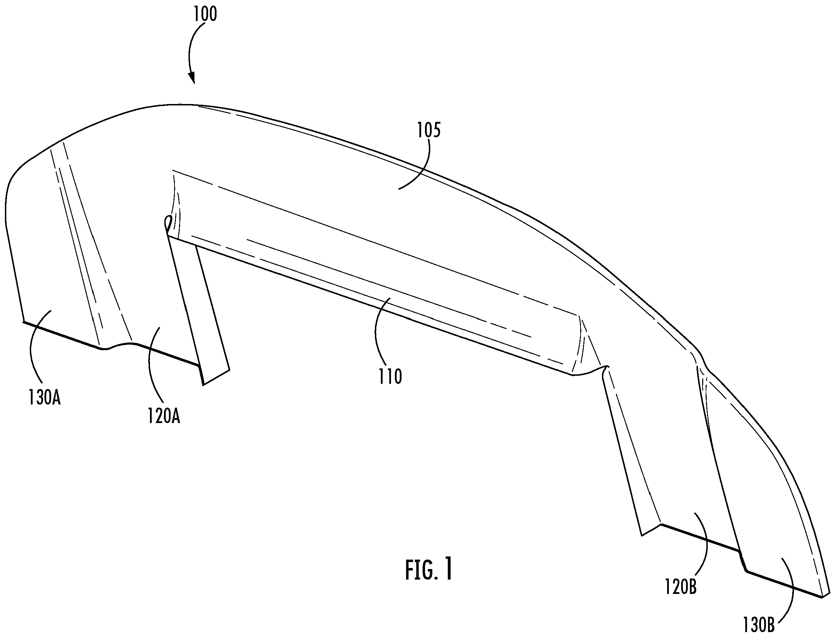

As illustrated in FIG. 1, a perspective view of an example embodiment of a bi-directional splitter 100 is shown having a front section 105 disposed toward a front of the vehicle to which it attaches, a first surface 110, a second surface 120A, a third surface 120B, and side extensions 130A and 130B flanking the second surface and third surface are shown. The bi-directional splitter 100 of example embodiments described herein is configured to attach to an underside of a front of a vehicle with airflow generally along a bottom side of the splitter shown in FIG. 1 as shown by arrow 104. The front section 105 of the illustrated embodiment generally defines a horizontal plane of the bi-directional splitter 100, where the first surface 110, second surface 120A, and third surface 120B are angled away from the horizontal plane, and the side extensions 130A-B are parallel with the horizontal plane.

The first surface 110 aligns with a center of a width of the underside of the front end of the vehicle, and in some embodiments, substantially spans a distance between the front tires of the vehicle, while the second surface 120A and third surface 120B of some embodiments align with the front tires of the vehicle, and are adjacent to the side extensions 130A and 130B. Thus, the first surface 110 is disposed between the second surface 120A and third surface 120B. According to some embodiments, a line of symmetry is defined along the centerline of the bi-directional splitter 100, and therefore the second surface 120A and third surface 120B are substantially identical.

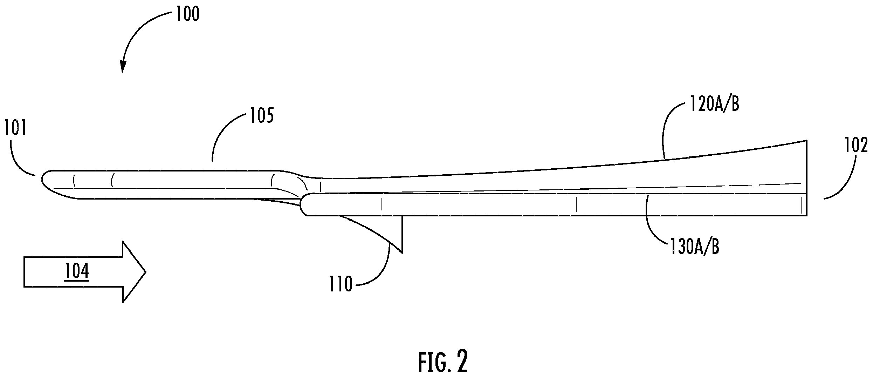

As illustrated in FIG. 2, a side view of the example embodiment of the bi-directional splitter 100 of FIG. 1 is shown. The first surface 110 of the illustrated embodiment is a curved surface, having an angle of between about 5 and 45 degrees (from a fore end of the first surface to an aft end of the first surface) from the horizontal plane such that lift is generated by air traveling over the first surface from the fore end 101 of the bi-directional splitter 100 (i.e., when a vehicle is traveling forward). Air flows across the bi-directional splitter from a fore end 101 to an aft end 102 when a vehicle is traveling forward, creating the lift and downforce effects described herein.

The second surface 120A and third surface 120B of the illustrated embodiment of FIG. 2 are each curved surfaces, defining angles between 5 and 45 degrees (from a fore end of the second or third surface to an aft end of the second or third surface) from the horizontal plane such that downforce is generated upon air flowing from the fore end 101 of the bi-directional splitter 100 towards the aft end 102 of the bi-directional splitter, and across the second surface 120A and third surface 120B. As illustrated in FIG. 2, the first surface 110 is angled in the opposite direction of the second surface 120A and the third surface 120B, hence the direction of the forces that each respectively generate.

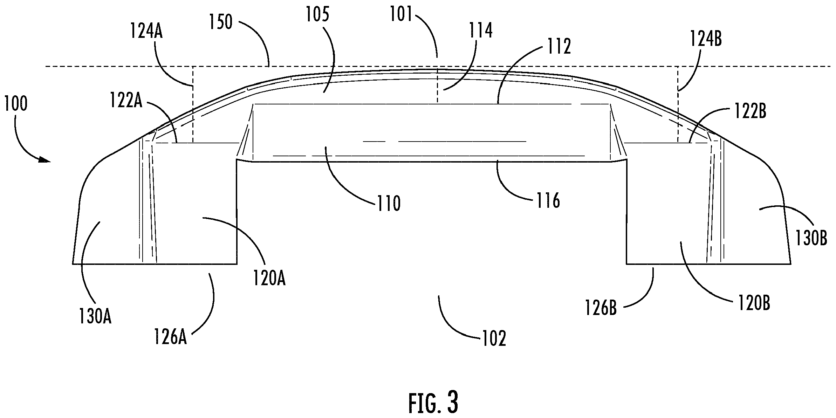

As illustrated in FIG. 3, a top view of the example embodiment of the bi-directional splitter 100 of FIGS. 1 and 2 is shown. According to the illustrated embodiment of the bi-directional splitter 100, the first surface 110 and front section 105 are aligned along the centerline of the bi-directional splitter, with the fore and aft ends of the vehicle and bi-directional splitter 100 corresponding to one another. The second surface 120A and third surface 120B of the illustrated embodiment are at least partially aligned with the tires of the vehicle, and therefore positioned symmetrically on either side of the first surface 110, while the side extensions 130A and 130B are positioned symmetrically adjacent to the second surface 120A and the third surface 120B, respectively.

The first surface 110 is further forward on the bi-directional splitter 100 than the second surface 120A and third surface 120B. A line 150 is illustrated in FIG. 3 at a position of the foremost point of the bi-directional splitter. A break line 112 is defined where the first surface 110 intersects with the front section 105 in the horizontal plane at a first distance 114 from the foremost point of the bi-directional splitter. A break line 122A is defined where the second surface 120A intersects the front section 105 in the horizontal plane and a break line 122B is defined where the third surface 120B intersects the front section 105 in the horizontal plane. A distance 124A is defined from the foremost point of the bi-directional splitter and the second surface 120A while a distance 124B is defined from the foremost point of the bi-directional splitter and the third surface 120B. The distance 124A and distance 124B are each shorter than distance 114. According to the illustrated embodiment, the distance 124A is substantially equal to the distance 124B.

A width of the first surface 110 is generally defined as the distance between the second surface 120A and third surface 120B, though there is some degree of transitional area between the first surface and the second and third surfaces. In the illustrated embodiment, the first surface 110 spans a greater width than the second surface 120A and third surface 120B combined. According to the bi-directional splitter of FIG. 3, the first surface 110 has a first length between the fore end at break line 112 and the aft end 116 while the second surface 120A and third surface 120B each have a respective length between break lines 122A or 122B and aft ends 126A or 126B, respectively. The length of the first surface 110 of the illustrated embodiment is roughly half of the length of the second surface 120A and third surface 120B.

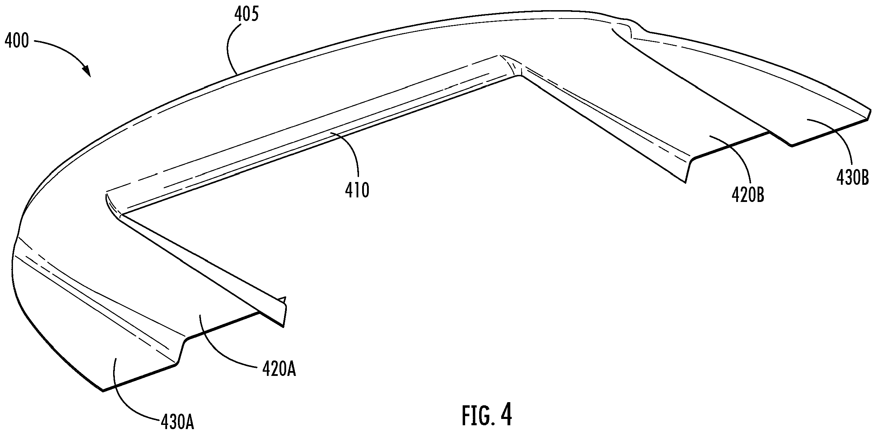

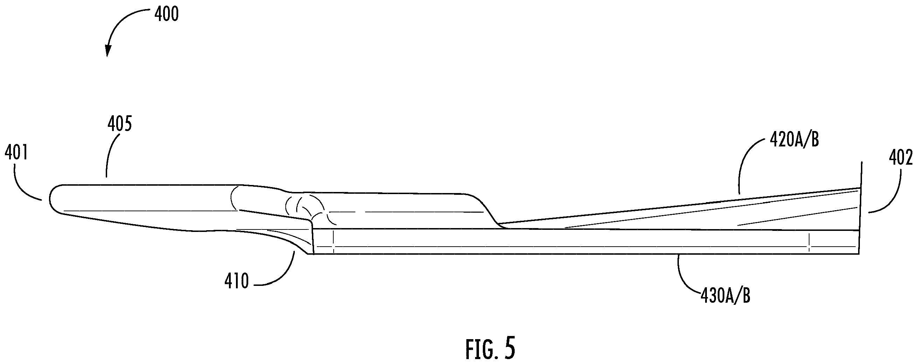

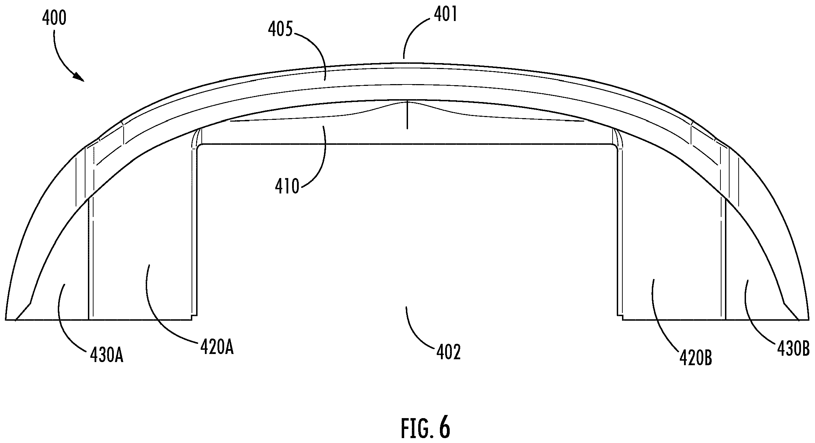

As illustrated in FIG. 4, a perspective view of a second embodiment of a bi-directional splitter 400 having a front section 405, a first surface 410, a second surface 420A, a third surface 420B, and side extensions 430A and 430B is shown. The second embodiment is of a similar configuration as the first embodiment, such that front sections 405 and 105, first surfaces 410 and 110, second surfaces 420A and 120A, third surfaces 420B and 120B, and side extensions 430A-B and 130A-B, perform the same functions and are configured to be positioned similarly on the underside of the fore end of the vehicle. FIG. 5 and FIG. 6 illustrate a side view and top view of the bi-directional splitter 400, respectively. A significant distinction between bi-directional splitter 100 and bi-directional splitter 400 is illustrated in FIG. 4 and FIG. 6. The bi-directional splitter 400 of FIGS. 4-6 includes a more complex curvature from the front section 405 to an aft end of the first surface 410. Further, the transitions from the front section 405 to the second surface 420A and third surface 420B are not defined at a break line, but include a transition region of curvature from the front section 405 to the second surface 420A and the third surface 420B. The front section, including a more pronounced curvature away from the vehicle from a fore end of the front section to an aft end, provides additional lift across the front section 405 in response to air flowing over the front section from the front end of the vehicle. This surface contouring results in the aerodynamic properties of the bi-directional splitter 400 affecting a greater surface area relative to the bi-directional splitter 100 of FIGS. 1-3 by directing more air away from the center of the underside of the vehicle, and therefore away from the first surface 410 and towards the second surface 420A and third surface 420B.

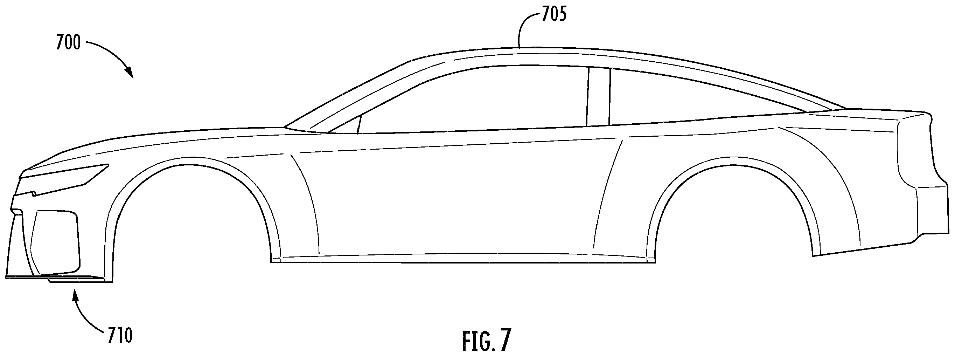

FIG. 7 illustrates an example embodiment of the improved system employing a bi-directional splitter, including a side view of a vehicle 705 and a location 710 for an embodiment of the bi-directional splitter to be secured on the underside of the vehicle 705. According to the embodiment, the orientation of the embodiment of the bi-directional splitter is that of the side views depicted in FIG. 2 and FIG. 5 with respect to its location 710 on the side view of the vehicle 705.

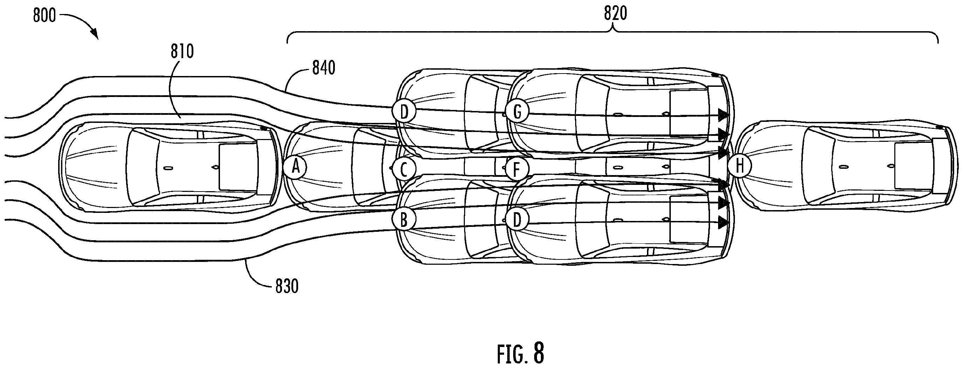

Having described the bi-directional splitter above, the operation of the bi-directional splitter in a racing traffic scenario is described further herein. As illustrated in FIG. 8, relative positions between a leading vehicle 810 and trailing vehicle 820 are shown. A leading vehicle 810 is shown relative to trailing vehicle positions A through H, of a trailing vehicle 820 in a race traffic scenario. The illustrated scenario of FIG. 8 is described herein with respect to racing conditions, where both the leading vehicle 810 and trailing vehicle 820 are traveling forward at racing speeds (e.g., above conventional highway speeds). At least the trailing vehicle 820 is configured with an embodiment of the bi-directional splitter described above with respect to FIGS. 1-7.

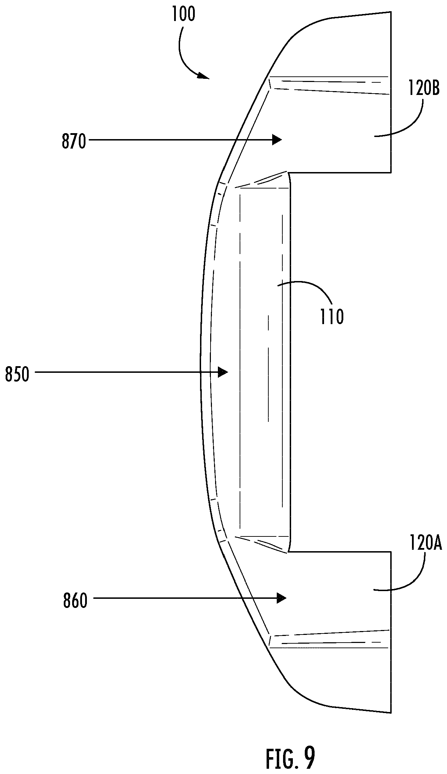

The trailing vehicle 820 is shown in position A, immediately behind the leading vehicle 810 and with the central axes of both the leading vehicle 810 and trailing vehicle 820 substantially aligned. The term "substantial alignment" described herein refers to alignment that is at least within a quarter of a car width out of parallel axial alignment between the vehicles. Airflow around the leading vehicle 810 is shown in a simplified, general path by arrows 830 and 840 reflecting airflow around the leading vehicle 810. The air flow is very complex in reality with airflow over the leading vehicle 810, under the leading vehicle, and various turbulent zones created by the leading vehicle; however, the general air flow illustrated in FIG. 8 reflects a general path of airflow that may impact performance of the bi-directional splitter described herein. In position A, airflow (arrows 830 and 840) immediately behind the leading vehicle is blocked and does not substantially impinge upon the front of the trailing vehicle 820, particularly in a center of the trailing vehicle and under the trailing vehicle. In a scenario in which the bi-directional splitter described herein is employed on the trailing vehicle, the airflow over the first surface 110 is interrupted at least in part in position A. FIG. 9 illustrates the airflow paths over the surfaces of the bi-directional splitter 100 showing path 850 of airflow over the first surface 110, path 860 as airflow over the second surface 120A, and path 870 as airflow over the third surface 120B. In position A, airflow in path 850 is interrupted while there remains some degree of airflow along path 860 and path 870.

As described above, the bi-directional splitter of example embodiments employs different surfaces to affect different lift forces and down forces. In position A, with airflow over the first surface 110 along path 850 interrupted by the leading vehicle 810, the lift forces generated by the first surface are diminished. With airflow over the second surface 120A and third surface 120B remaining at least in part, the second surface 120A and third surface 120B still provide some degree of downforce. The net effect of an example embodiment of the bi-directional splitter on a trailing vehicle 820 in position A traveling at 100 mph (miles per hour) is a net gain of around 50lbs of downforce relative to the same vehicle in the same travel conditions and position A not employing the bi-directional splitter . This gain in downforce is largely due to the reduction in lift force from the airflow over the first surface along path 850 being interrupted, while a portion of airflow remains along paths 860 and 870 generating downforce.

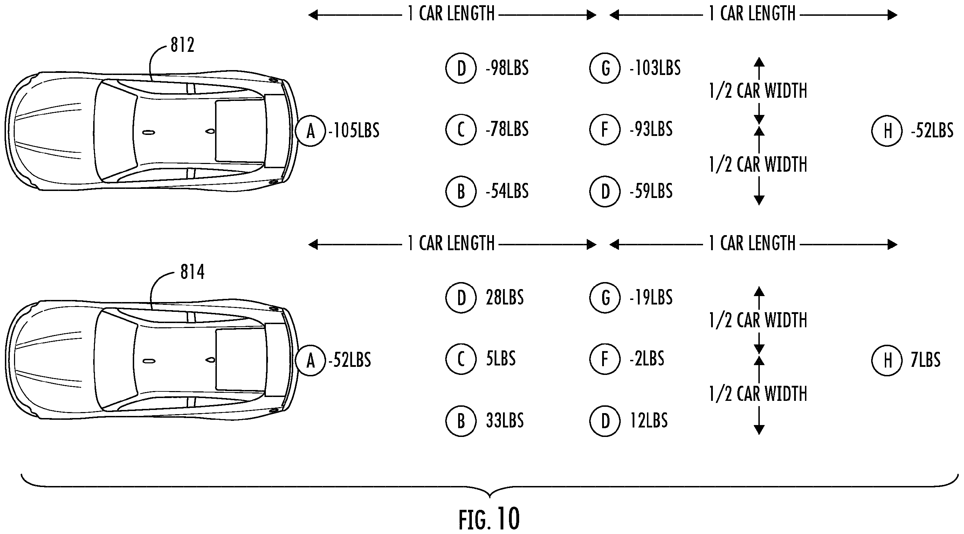

The net effect of the forces of the bi-directional splitter of embodiments described herein changes with respect to a relative position between the leading vehicle 810 and trailing vehicle 820. FIG. 10 illustrates the difference between a baseline trailing vehicle 812 and a trailing vehicle 814 including the bi-directional splitter described herein when traveling. The forces shown adjacent to each position in FIG. 10 reflect the change in downforce for a vehicle in the respective position relative to a vehicle traveling through clean air, with a positive number reflecting an increase in downforce, and a negative number reflecting a loss in downforce. As described above, an increase in downforce improves performance, such that the performance of the vehicle changes based on a position relative to the leading vehicle.

Because of the specific configuration of the bi-directional splitter described herein, the relative position between the leading vehicle and the trailing vehicle has a significant effect on the forces exerted on the car by way of the bi-directional splitter. A trailing vehicle 820 in position C is half a car length behind the leading vehicle, allowing the airflow around the leading vehicle to begin to converge behind the leading vehicle. This results in airflow remaining substantially interrupted along path 850, while increasing airflow along paths 860 and 870 shown in FIG. 9. This results in a net gain of 5lbs of downforce, which is a change of near 85lbs from a baseline trailing vehicle not employing the bi-directional splitter.

A trailing vehicle 820 in position D, as shown in FIG. 8, is a half car width to the right of the leading vehicle 810 and half of a car length back from the leading vehicle receives more airflow, particularly on a right side of the trailing vehicle. As shown in FIG. 10, trailing vehicle 812 without the bi-directional splitter, sees a net loss of 981bs of downforce, while trailing vehicle 814 employing the bi-directional splitter sees a net gain of 28lbs in downforce - a change of near 130lbs. The increase in downforce is largely due to airflow along path 870 shown in FIG. 9 as the trailing vehicle steps out from behind the leading vehicle. Similarly, a trailing vehicle 820 in position B, half a car width to the left of the leading vehicle 810 and half a car length behind the leading vehicle sees a net gain of 33lbs of downforce, which is a change of almost 90lbs from the baseline vehicle as seen in FIG. 10. This is generally due to an increase in airflow along path 860 over the second surface. The difference between the forces seen in position Band position D are due to the vehicles of the illustrated embodiment being asymmetrical, as would be the case for a vehicle designed for use on a banked track with turns in a single direction.

As the trailing vehicle 820 falls to a full car length behind the leading vehicle 810, the forces remain impacted by the airflow around the leading vehicle. In position F, with the trailing vehicle substantially aligned with the leading vehicle but trailing by a car length, the net effect of the bi-directional splitter is a loss of two pounds of downforce which is relatively negligible. This is due to the air flow along path 850 over the first surface creating lift forces that substantially cancel out the downforce generated by the airflow along paths 860 and 870 over the second surface 120A and third surface 120B, respectively. However, there is an increase of around 90lbs in downforce relative to a baseline vehicle, as shown in FIG. 10.

A trailing vehicle 820 in position G, half a car width to the right of the leading vehicle 810 and a full car length behind, sees a net effect of the bi-directional splitter as a loss of 19lbs of downforce. This is relative to a baseline of a loss of 103lbs in downforce for a vehicle not employing the bi-directional splitter. A trailing vehicle 820 in position D, half a car width to the left of the leading vehicle 810 and a full car length behind the leading vehicle, sees a net effect of an increase of 12lbs in downforce. The baseline vehicle has a net loss of 59lbs of downforce. Finally, a trailing vehicle 820 in position H which is substantially axially aligned with the leading vehicle 810 and two car lengths behind the leading vehicle sees a net effect of an increase of seven pounds of downforce. This reflects a minor change to the overall forces on the vehicle as the lift force generated by the first surface 110 from airflow path 850 is substantially canceled by the downforce from the second surface 120A and third surface 120B from air flow along paths 860 and 870, respectively. This is due to the airflow disruption of the leading vehicle diminishing.

Embodiments of the bi-directional splitter described herein provide aerodynamic forces that change based on a position of a trailing vehicle employing the bi-directional splitter relative to a leading vehicle. The combination of surfaces providing both positive lift force and downforce has a generally negligible impact on the net downforce of a vehicle while traveling through clean, laminar air. However, when a vehicle having the bi-directional splitter is a trailing vehicle in race traffic, the bi-directional splitter can have a substantial impact to the overall net downforce on the front end of the trailing vehicle. This helps avoid a loss of downforce for a similar vehicle not employing the bi-directional splitter, which puts a trailing vehicle at a disadvantage in a race traffic scenario.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus comprising:
a bi-directional splitter configured to be attached to an underside of a fore end of a vehicle,
wherein a top side of the bi-directional splitter is attached to the vehicle, and a bottom side of the bi-directional splitter is facing away from the vehicle,
wherein the bi-directional splitter defines a horizontal plane and comprises a fore end, an aft end, a first surface, a second surface, and a third surface,
wherein an aft end of the first surface is further away from the vehicle than a fore end of the first surface,
wherein the first surface is disposed between the second surface and third surface, and wherein aft ends of the second surface and third surface are positioned closer to the vehicle than fore ends of the second surface and third surface.

2. The apparatus of claim 1, wherein the first surface is positioned at an angle away from the vehicle relative to the horizontal plane and wherein the second surface and third surface are disposed at an angle towards the vehicle relative to the horizontal plane.

3. The apparatus of claim 2, wherein the angle of the first surface with respect to the horizontal plane is between 5 degrees and 45 degrees.

4. The apparatus of any preceding claim, wherein a width of the first surface is a distance between the second surface and the third surface, wherein the width of the first surface is greater than a width of the second surface and a width of the third surface combined.

5. The apparatus of any preceding claim, wherein the first surface, the second surface, and the third surface intersect the horizontal plane at a first distance, a second distance, and a third distance respectively from the fore end of the bi-directional splitter, wherein the first distance is shorter than the third distance and the second distance.

6. The apparatus of any preceding claim, wherein the first surface has a first length between the fore end and the aft end of the first surface, the second surface has a second length between the fore end and the aft end of the second surface, and the third surface has a third length between the fore end and the aft end of the third surface, wherein the first length is shorter than the second length and the third length.

7. A system comprising:
a vehicle; and
a bi-directional splitter attached to an underside of a fore end of the vehicle,
wherein a top side of the bi-directional splitter is attached to the vehicle, and a bottom side of the bi-directional splitter is facing away from the vehicle,
wherein the bi-directional splitter defines a horizontal plane and comprises a fore end, an aft end, a first surface, a second surface, and a third surface,
wherein an aft end of the first surface is further away from the vehicle than a fore end of the first surface,
wherein aft ends of the second surface and third surface are positioned closer to the vehicle than fore ends of the second surface and third surface.

8. The system of claim 7, wherein the first surface is positioned at an angle away from the vehicle relative to the horizontal plane and wherein the second surface and third surface are disposed at an angle towards the vehicle relative to the horizontal plane.

9. The system of claim 8, wherein the angle of the first surface with respect to the horizontal plane is between about 5 degrees and 45 degrees.

10. The system of any of claims 7-9, wherein a width of the first surface is substantially equal to a distance between the second and the third surface, wherein the width of the first surface is greater than the width of the second surface and the width of the third surface combined.

11. The system of any of claims 7-10, wherein the first surface, the second surface, and the third surface intersect the horizontal plane at a first distance, a second distance, and a third distance respectively from the fore end of the bi-directional splitter, wherein the first distance is shorter than the third distance and the second distance.

12. The system of any of claims 7-11, wherein the first surface has a first length between the fore end and the aft end of the first surface, the second surface has a second length between the fore end and the aft end of the second surface, and the third surface has a third length between the fore end and the aft end of the third surface, wherein the first length is shorter than the second length and the third length.

13. A method comprising:
generating lift forces and downforces in response to air flowing over a bi-directional splitter from a fore end of the bi-directional splitter to an aft end of the bi-directional splitter,
wherein the bi-directional splitter is attached to an underside of a fore end of a vehicle,
wherein a top side of the bi-directional splitter is attached to the vehicle, and a bottom side of the bi-directional splitter is facing away from the vehicle,
wherein the bi-directional splitter defines a horizontal plane and comprises a first surface, a second surface, and a third surface;
generating, from the first surface of the bi-directional splitter, a lift force in response to the air flowing over the first surface,
wherein an aft end of the first surface is further away from the vehicle than a fore end of the first surface; and
generating, from a second surface and a third surface, downforce in response to the air flowing over the second surface and third surface,
wherein the first surface is disposed between the second surface and third surface, and wherein aft ends of the second surface and third surface are positioned closer to the vehicle than fore ends of the second surface and third surface.

14. The method of claim 13, wherein the first surface is positioned at an angle of between 5 degrees and 45 degrees away from the vehicle relative to the horizontal plane, and wherein the second surface and third surface are disposed at an angle of between 5 degrees and 45 degrees towards the vehicle relative to the horizontal plane.

15. The method of claim 13 or 14, wherein the lift forces and downforces combine to a net lift force in response to air flowing over the first surface, the second surface, and the third surface of the bi-directional splitter at a speed of more than 100 miles per hour, wherein the lift forces and downforces combine to a net downforce in response to the air flowing over the first surface being interrupted.
